# EUROPEAN PATENT APPLICATION

(11) **EP 4 815 399 A1**
(43) Date of publication of application: **30.09.2026**
(21) Application number: 25198422.5
(22) Date of filing: 27.08.2025
(51) Int. Cl.: H04L 45/24, H04L 1/08, H04L 12/46, H04L 47/34

(54) **COMMUNICATION DEVICE AND COMMUNICATION ROUTE CHANGE INSTRUCTION METHOD**

(30) Priority: 26.03.2025 JP 2025051176
(71) Applicant: Hitachi, Ltd., Tokyo 100-8280 (JP)
(72) Inventor: SATO, Riku, Tokyo, 100-8280 (JP); NOMIZU, Takuma, Tokyo, 100-8280 (JP)
(74) Representative: Mewburn Ellis LLP

(57) **Abstract**

The present invention provides a communication device (A, B) capable of making a flexible route change such as a route change by programming on the basis of external information such as scheduling and line charges or a route change by a manual operation in a wireless network having a plurality of communication routes.

Provided is a communication device that is communicably connected via a plurality of communication routes and that has a memory and a processor, in which the memory stores a route selector (A142, B142) and middleware, the route selector holds usage route information for each record, the middleware includes an external interface section (A132, B132) and an encapsulation section (A133, B133), when receiving a route change instruction packet, the external interface section updates a usage route list held by the route selector according to the route change instruction packet, and the encapsulation section refers to the updated route selector and makes one transmission packet redundant into a plurality of transmission packets corresponding to the respective communication routes for transmission.

## Description

### BACKGROUND OF THE INVENTION

### 1. Field of the Invention

The present invention relates to a configuration of a communication device and a control method thereof, and particularly relates to a technique effective when being applied to communication middleware of a wireless network having difficulty in communication stability.

### 2. Description of the Related Art

In fields where there is a need to use wireless communication, such as communication between on-site equipment using a wireless local area network (LAN) at a production site or application of a public network to a mobile object such as a railway vehicle, high reliability of communication is further required. In conventional wireless communication, reliability of communication routes against frame loss, congestion, eavesdropping risk, and the like has been a problem, and redundancy of communication routes using relay middleware, a method of communication while switching a plurality of routes, and the like have been used.

As a background technique in this technical field, there is, for example, a technique as described in JP-2024-122157-A. JP-2024-122157-A discloses "a mechanism for redundancy of packets and transmission/reception of packets while switching a plurality of routes by using relay middleware."

### SUMMARY OF THE INVENTION

In the wireless network in which reliability is improved by multiplexing and redundancy of a plurality of network routes as described above, there is a problem that an active communication route change from an external terminal, such as selecting a line with a lower cost, cannot easily be made in a case where external information is used.

In JP-2024-122157-A, a method of changing a communication route used by the relay middleware on the basis of information outside the device is not clear. Therefore, when the relay middleware is used to make a packet redundant and communication is performed via a plurality of routes, the relay middleware cannot change a communication route to be used on the basis of external information, or an external terminal cannot instruct the relay middleware to change a route on the basis of external information, and there is room for improvement.

Therefore, an object of the present invention is to provide a communication device and a communication route change instruction method using the same capable of making a flexible route change such as a route change by programming on the basis of external information such as scheduling and line charges or a route change by a manual operation in a wireless network having a plurality of communication routes.

In order to solve the above problem, the present invention provides a communication device that is communicably connected via a plurality of communication routes and that has a memory and a processor, in which the memory stores a route selector and middleware, the route selector holds usage route information for each record, the middleware includes an external interface section and an encapsulation section, when receiving a route change instruction packet, the external interface section updates a usage route list held by the route selector according to the route change instruction packet, and the encapsulation section refers to the updated route selector, and makes one transmission packet redundant into a plurality of transmission packets corresponding to the respective communication routes for transmission.

In addition, the present invention provides a communication route change instruction method of a communication device that is communicably connected via a plurality of communication routes. The method includes (a) a step in which, when receiving a route change instruction packet, an external interface section updates a usage route list held by a route selector according to the route change instruction packet, and (b) a step in which an encapsulation section refers to the updated route selector and makes one transmission packet redundant into a plurality of transmission packets corresponding to the respective communication routes for transmission.

According to the present invention, it is possible to realize a communication device and a communication route change instruction method using the same capable of making a flexible route change such as a route change by programming on the basis of external information such as scheduling and line charges or a route change by a manual operation in a wireless network having a plurality of communication routes.

This can contribute to high reliability and improvement in convenience of a wireless network.

Problems, configurations, and effects other than those described above will be clarified by the description of the following embodiments.

### BRIEF DESCRIPTION OF THE DRAWINGS

FIG. 1 is an overall schematic view of an external packet relay configuration according to a first embodiment of the present invention;
FIG. 2 is an overall schematic view of an own device transmission packet relay configuration according to the first embodiment of the present invention;
FIG. 3 is a diagram for depicting an example of a table set in route selectors of FIG. 1 and FIG. 2;
FIG. 4 is a diagram for depicting an example of a route management table;
FIG. 5 is a diagram for depicting a packet structure in highly-reliable communication;
FIG. 6 is a diagram for depicting a structure of a route change instruction packet;
FIG. 7 is a diagram for depicting an example of an instruction packet;
FIG. 8 is a diagram for depicting an example of a response packet;
FIG. 9 is a flowchart for depicting processing in an external interface section;
FIG. 10 is a flowchart for depicting processing in an external interface section according to a second embodiment of the present invention; and
FIG. 11 is a diagram for depicting an example of mapping between a command value and instruction contents.

### DESCRIPTION OF THE PREFERRED EMBODIMENTS

Hereinafter, embodiments of the present invention will be described by using the drawings. It should be noted that, in each of the drawings, the same configurations are denoted by the same signs, and detailed description of overlapped parts is omitted.

### [First Embodiment]

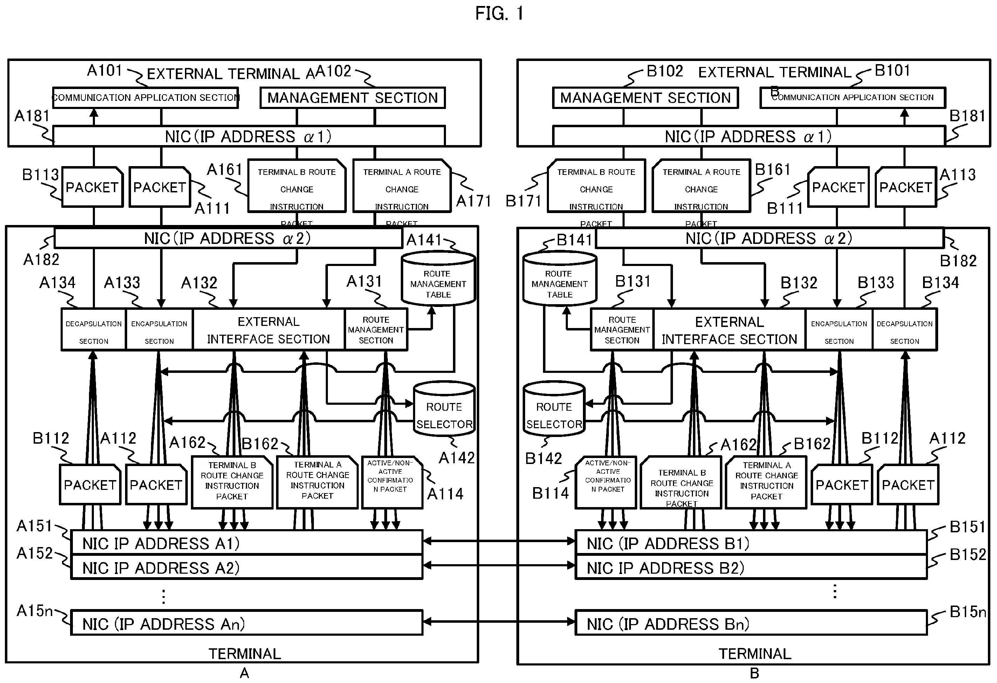

A communication device and a communication route change instruction method according to a first embodiment of the present invention will be described with reference to FIG. 1 to FIG. 6 and FIG. 9.

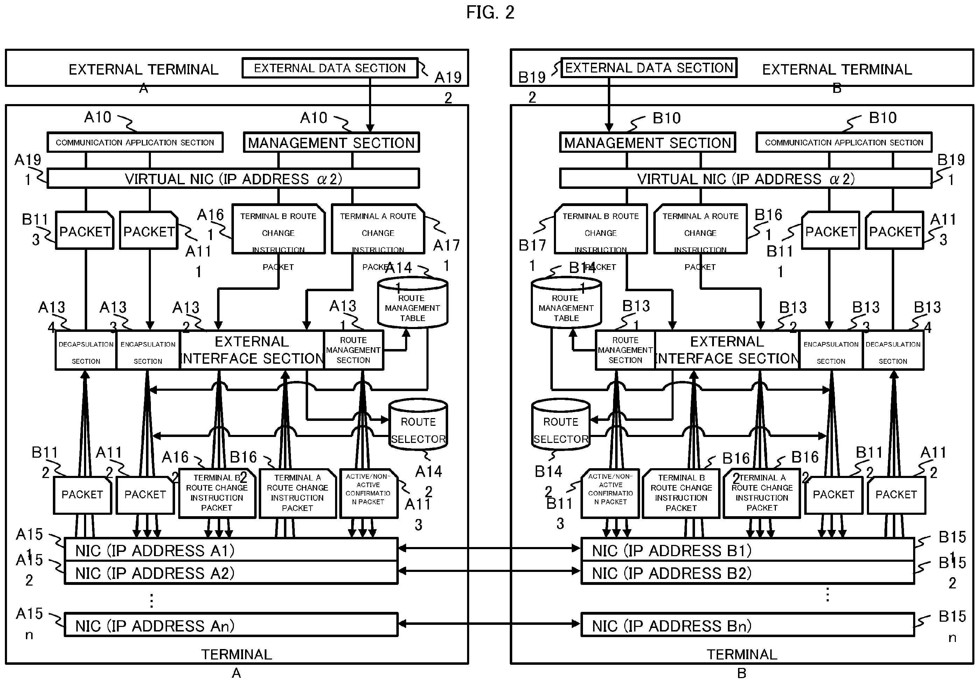

First, a wireless network as a target of the present invention will be described by using FIG. 1 to FIG. 3 and FIG. 5. FIG. 1 is an overall schematic view of an external packet relay configuration according to the present invention. FIG. 2 is an overall schematic view of an own device transmission packet relay configuration according to the present invention. A terminal B has a configuration equivalent to that of a terminal A. In FIG. 1, FIG. 2, and the following description, elements of the terminal B corresponding to those related to the terminal A are denoted by signs obtained by replacing a character "A" of the signs added to the elements of the terminal A with "B."

Thus, for example, a sign "B132" is added to a communication application section (external interface section) of the terminal B corresponding to an external interface section A132 of the terminal A. In addition, in the following description, the functions of the terminal A are mainly described, and since the functions of the terminal B are equivalent to those of the terminal A, the description thereof is appropriately omitted.

Each of the terminal A and the terminal B has a memory and a processor, each memory stores a program for realizing the functions of each section of the terminal A and the terminal B, and each processor executes each program to realize each function of the terminal A and the terminal B. In addition, in order to distinguish specific functions (sections) from the other functions (sections) when explaining the configurations and operations of the terminal A and the terminal B in this specification, the functions (sections) other than the specific functions (sections) are called "middleware."

Hereinafter, assumptions when packet redundancy is performed will be described for the terminal A and the terminal B. There are two configurations as the assumptions of the present invention.

In the first configuration, as depicted in FIG. 1, a communication application section A101 of an external terminal A connected to the terminal A transmits a packet A111 to the terminal A, relay middleware mounted on the terminal A makes routes redundant and highly reliable, relay middleware mounted on the terminal B as the opposite equipment receives a redundant encapsulation packet A112, and a communication application section B101 of an external terminal B connected to the terminal B receives a decapsulation packet A113. The system configuration to perform this is called an "external packet relay configuration."

In the second configuration, as depicted in FIG. 2, the communication application section A101 mounted on the terminal A transmits the packet A111, relay middleware mounted on the terminal A receives the packet A111 through a virtual network interface card (NIC) A191 and makes routes redundant and highly reliable to transmit the packet, relay middleware mounted on the terminal B as the opposite communication device receives the redundant encapsulation packet A112 to transmit it to the communication application section B101 mounted on the terminal B, and the communication application section B101 receives the decapsulation packet A113. The system configuration to perform this is called an "own device transmission packet relay configuration."

Route management sections A131 and B131 of the terminal A and the terminal B transmit and receive active/non-active confirmation packets A114 and B114 to/from each other in a regular cycle between the terminals on all communication routes to be used. For example, in a case where the terminal A receives the active/non-active confirmation packet B114 from the terminal B as the opposite communication device, the route used for the communication of the active/non-active confirmation packet B114 is recorded in a route management table A141 as a usable route. In a case where the active/non-active confirmation packet B114 cannot be received for a certain period of time, it is recorded in the route management table A141 as an unusable route.

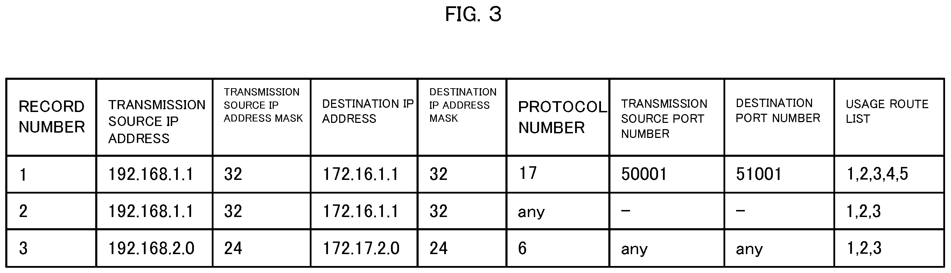

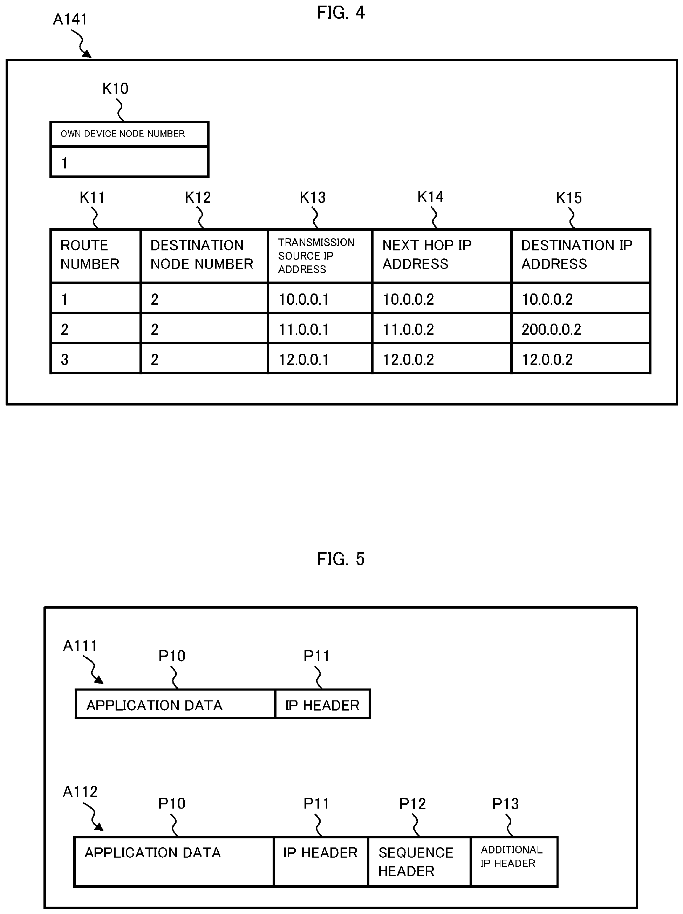

FIG. 3 is a diagram for depicting an example of a table set in route selectors A142 and B142 depicted in FIG. 1 and FIG. 2. In addition, FIG. 5 is a diagram for depicting a packet structure in highly-reliable communication. As depicted in FIG. 3, a correspondence table of a transmission source internet protocol (IP) address, a transmission source IP address mask, a destination IP address, a destination IP address mask, a protocol number, a transmission source port number, a destination port number, and a usage route list is set for each record number in the route selector A142.

In the external terminal A, an IP address α2 of an NIC A182 of the terminal A is set in the routing table as a gateway for the network address of an IP address α1.

A flow of highly-reliable communication in the external packet relay configuration of FIG. 1 will be described below.

The communication application section A101 of the external terminal A sends the packet A111 to the IP address α1 of an NIC B181 of the external terminal B as the opposite communication device. The packet A111 sent to the IP address α1 of the NIC B181 of the external terminal B is routed to the NIC A182 of the terminal A according to the routing table. An encapsulation section A133 of the terminal A clips the packet A111 from the NIC A182.

The transmission source IP address, the destination IP address, the protocol number, the transmission source port number, and the destination port number of the clipped packet A111 are checked against the transmission source IP address, the transmission source IP address mask, the destination IP address, the destination IP address mask, the protocol number, the transmission source port number, and the destination port number of the route selector A142 in the ascending order of the record numbers, and the usage route list of the row that is first matched is referred to.

The encapsulation section A133 adds an IP header including information of IP addresses corresponding to relay NICs A151 to A15n as the transmission source NICs and information of IP addresses corresponding to NICs B151 to B15n of the terminal B as the destination terminal and an NX-R header including a packet sequence number, to the usage route list and the packet A111 that has been referred to. This is referred to as "encapsulation." The encapsulation section A133 sends the encapsulated encapsulation packet A112 from the NICs A151 to A15n to the outside of the terminal A by using a plurality of routes.

In the terminal B serving as the reception-side terminal, a decapsulation section B134 receives from the NICs B151 to B15n the encapsulation packet A112 from the terminal A. The encapsulation packet A112 is managed by the sequence number included in the NX-R header, and the redundant packets have the same sequence number. The sequence number is managed for each combination of the transmission source and the destination. Only one packet having arrived first is received among the packets having the same sequence number, and the other packets are discarded.

The decapsulation section B134 deletes the additional IP header and the NX-R header of the encapsulation packet A112. This is referred to as "decapsulation." After the decapsulation of the encapsulation packet A112, the decapsulation section B134 performs transmission processing of the decapsulated decapsulation packet A113.

The decapsulated decapsulation packet A113 is routed to the NIC B181 of the external terminal B according to the routing table. The routed decapsulation packet A113 is clipped and received by the communication application section B101.

It should be noted that, although the explanation has been made above on the assumption that the terminal A is the transmission side and the terminal B is the reception side, the roles on the transmission side and the reception side can be switched because network communication is mutually performed. In addition, in FIG. 1 and FIG. 2, the number of terminals is depicted as one on each of the transmission side and the reception side, but the number can be increased or decreased to any number. Further, the number of routes can freely be changed.

The high reliability is completed between the repeaters, and can be realized without changing an application for performing transmission and reception as long as the application uses the internet protocol. Further, not only route redundancy but also packet redundancy, packet encryption, communication with response confirmation, retransmission control by a protocol such as a transmission control protocol (TCP), teaming, and the like can be combined without changing an application.

By assigning the sequence number to the encapsulation packet A112, it is possible to detect packet omission and packet arrival order reversal. The packet arrival order reversal can be corrected by the decapsulation section B134. In addition, in a case where the sequence number of the packet arriving at the decapsulation section B134 is reversed, the packet can be saved temporarily in the memory, rearranged in the correct order, and sent to the communication application section B101 to correct the packet arrival order.

Next, a flow of highly-reliable communication in the own device transmission packet relay configuration of FIG. 2 will be described.

In the case of the own device transmission packet relay configuration, the setting to route the packet for the destination IP address (the IP address α1 or the IP address α2) used by the communication application section A101 of the terminal A to the virtual NIC A191 is made in advance. The packet A111 sent by the communication application section A101 to the IP address α1 or the IP address α2 is routed to the virtual NIC A191, and the encapsulation section A133 clips the packet A111.

As in the external packet relay configuration, the encapsulation section A133 encapsulates and sends the packet A111 to the terminal B, and the decapsulation section B134 receives the encapsulation packet A112 in the terminal B as the reception-side terminal. The decapsulation section B134 decapsulates the received encapsulation packet A112, and then sends the decapsulation packet A113 to the communication application section A101 of the own device according to the routing table. The routed decapsulation packet A113 is clipped and received by the communication application section B101.

The external packet relay configuration of FIG. 1 and the own device transmission packet relay configuration of FIG. 2 can be mixed in one system. For example, the terminal A can have the external packet relay configuration, and the terminal B can have the own device transmission packet relay configuration. In this case, the communication application section A101 of the external terminal A connected to the terminal A transmits the packet A111 to the IP address α2 of a virtual NIC B191 of the terminal B.

Next, a flow in which a management section A102 of the external terminal A uses the external interface section A132 of the terminal A and changes the route used by the terminal A for route redundancy, which is a feature of the present embodiment, will be described by using FIG. 4, FIG. 6, and FIG. 9.

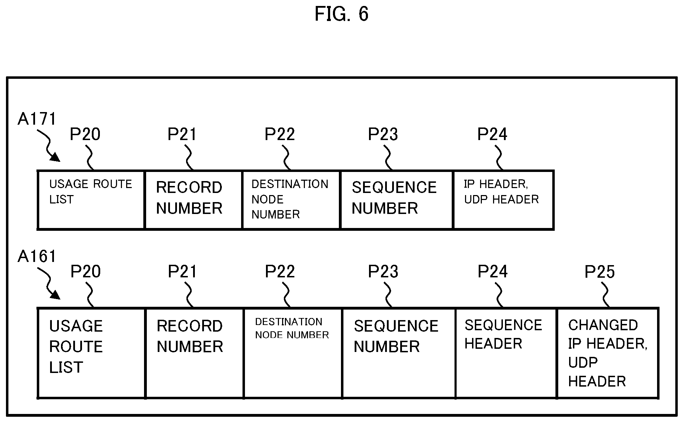

FIG. 4 is a diagram for depicting an example of a route management table. In addition, FIG. 6 is a diagram for depicting a structure of a route change instruction packet.

The route management table A141 depicted in FIG. 4 includes an own device node number table including an own device node number (K10) and a route information table including each information of a route number (K11), a destination node number (K12), a transmission source IP address (K13), a next hop IP address (K14), and a destination IP address (K15). The own device node number (K10) is a unique number set in advance in each terminal.

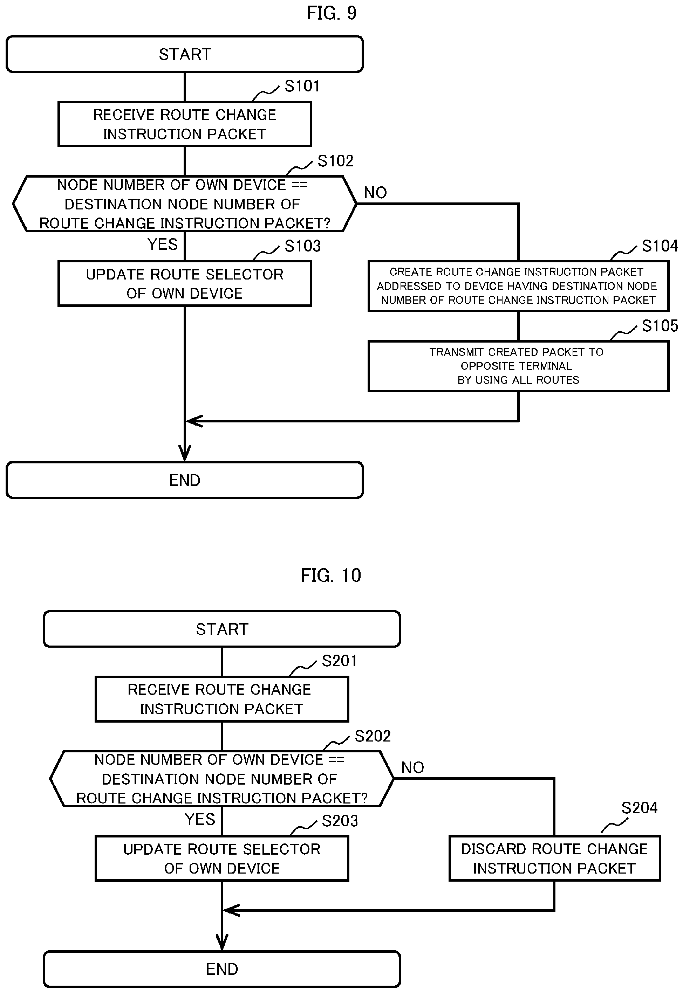

FIG. 9 is a flowchart for depicting processing in the external interface section A132 when a route change instruction is received from the management section A102.

In the external terminal A, the management section A102 transmits a terminal A route change instruction packet A171 depicted in FIG. 6 to the IP address α2 of the NIC A182 of the terminal A. Any number is stored in a sequence number (P23), the node number of the terminal A that is the route change instruction target is stored in a destination node number (P22), the record number of the route selector to be changed is stored in a record number (P21), and the changed route list is stored in a usage route list (P20).

As depicted in FIG. 9, first, the external interface section A132 of the terminal A receives the terminal A route change instruction packet A171 (Step S101). Next, the external interface section A132 interprets the contents of the received packet, and determines that the target device of the terminal A route change instruction packet A171 is the own device (Step S102), on the basis of the fact (YES in Step S102) that the node number of the own device matches the destination node number (P22) in the terminal A route change instruction packet A171. Thereafter, the route selector A142 of the own device is updated (Step S103).

Conversely, in a case where it is determined that the node number of the own device does not match the destination node number (P22) in the terminal A route change instruction packet A171 (NO in Step S102), the external interface section A132 creates a route change instruction packet addressed to the device having the destination node number (P22) of the terminal A route change instruction packet A171 (Step S104). Next, the external interface section A132 transmits the created packet to the terminal B as the opposite terminal by using all the routes (Step S105). At this time, the external interface section A132 of the terminal A changes the usage route list of the corresponding record number of the route selector A142 according to the usage route list (P20) of the terminal A route change instruction packet A171.

It should be noted that, at this time, the terminal A may return the result (success/failure or the like) of the route change by the external interface section A132 to the management section A102 of the external terminal A.

Thereafter, the encapsulation section A133 of the terminal A refers to the updated usage route list of the route selector A142, acquires the route to be used by a number, acquires information of the IP addresses corresponding to the relay NICs A151 to A15n as the transmission source NICs and information of the IP addresses corresponding to the relay NICs B151 to B15n as the NICs of the destination terminal, from the route management table using the route number as a key, and adds the information as an additional IP header, thereby relaying the packet passing through the new route.

As described above, the communication device of the present embodiment is a communication device that is communicably connected via a plurality of communication routes and has the memory and the processor, the memory stores the route selector A142 and the middleware, the route selector A142 holds the usage route information for each record, the middleware includes the external interface section A132 and the encapsulation section A133, the external interface section A132 updates, when receiving the route change instruction packet, the usage route list held by the route selector A142 according to the route change instruction packet, and the encapsulation section A133 refers to the updated route selector A142, and makes one transmission packet A111 redundant into a plurality of transmission packets (encapsulation packets A112) corresponding to the respective communication routes for transmission.

With the above-described configuration, it is possible to flexibly change the route on the basis of the information from the outside (external terminal A), and, for example, in a case where a user wants to temporarily use a low-cost line, it is possible to change to the low-cost line.

### [Second Embodiment]

A communication device and a communication route change instruction method according to a second embodiment of the present invention will be described with reference to FIG. 9 and FIG. 10.

In the present embodiment, a flow in which the management section A102 of the external terminal A uses the external interface section A132 of the terminal A and the external interface section B132 of the terminal B and changes the route used by the terminal B for route redundancy will be described. As described in the first embodiment, FIG. 9 is a flowchart for depicting processing in the external interface section A132 when a route change instruction is received from the management section A102. FIG. 10 is a flowchart when the external interface section B132 of the terminal B receives a terminal B route change instruction packet A162 from the terminal A.

In the external terminal A, the management section A102 transmits a terminal B route change instruction packet A161 depicted in FIG. 6 to the IP address α2 of the NIC A182 of the terminal A. Any number is stored in the sequence number (P23), the node number of the terminal B that is the route change instruction target is stored in the destination node number (P22), the record number of the route selector to be changed is stored in the record number (P21), and the changed route list is stored in the usage route list (P20).

As depicted in FIG. 9, first, the external interface section A132 of the terminal A receives the terminal B route change instruction packet A161 (Step S101). Next, the external interface section A132 interprets the contents of the received packet, confirms that the node number of the own device does not match the destination node number (P22) in the terminal B route change instruction packet A161 (NO in Step S102), and determines that the target device of the terminal B route change instruction packet A161 is not the own device (Step S102).

Next, on the basis of the terminal B route change instruction packet A161, the external interface section A132 of the terminal A replaces the IP header (P11) with a new IP header (P11) created from each information of the transmission source IP address (K13), the next hop IP address (K14), and the destination IP address (K15) of the route stored in the route management table A141, and creates the terminal B route change instruction packet A162 (Step S104). Next, the external interface section A132 transmits the created terminal B route change instruction packet A162 to the terminal B by using all the routes stored in the route management table A141 (Step S105).

Subsequently, as depicted in FIG. 10, the external interface section B132 of the terminal B receives the terminal B route change instruction packet A162 (Step S201). The external interface section B132 interprets the contents of the received packet, and determines that the target device of the terminal B route change instruction packet A162 is the own device (Step S202), on the basis of the fact (YES in Step S202) that the node number of the own device matches the destination node number (P22) in the terminal B route change instruction packet A162 (Step S202).

Next, the external interface section B132 of the terminal B updates the usage route list of the corresponding record number of the route selector B142 according to the usage route list (P20) of the terminal B route change instruction packet A162 (Step S203).

It should be noted that, at this time, the terminal B may return the result (success/failure or the like) of the route change by the external interface section B132 to the management section A102 of the external terminal A via the external interface section A132 of the terminal A or the terminal A.

Thereafter, the encapsulation section B133 of the terminal B relays the packet by using the routes stored in the updated use route list of the route selector B142.

Conversely, in a case where the node number of the received terminal B route change instruction packet A162 does not match the node number of the own device (NO in Step S202), the external interface section B132 discards the terminal B route change instruction packet A162 (Step S204).

It should be noted that the communication application section A101 and the management section A102 need not be mounted in the same device, and may be mounted in different devices.

As described above, the communication device of the present embodiment is configured with the own device (for example, the terminal A) and the opposite communication device (for example, the terminal B), the memory stores the route management table A141 for storing the information of the own device node number, the route change instruction packet received from the external terminal A includes the node number of the route change instruction target, and the external interface section A132 determines the route change instruction target device from the node number of the own device and the node number of the route change instruction target described in the route change instruction packet, updates the route selector A142 of the own device if the own device is the target, and creates and transmits the route change instruction packet to the opposite communication device if the opposite communication device is the target.

In addition, the own device receives the route change instruction packet from the opposite communication device, determines the route change instruction target device from the node number of the route change instruction target, updates the usage route list in the route selector A142 of the own device if the own device is the target, and discards the route change instruction packet in a case where the own device is not the target.

In addition, the route selector A142 includes each information of the record number, the transmission source IP address, the transmission source IP address mask, the destination IP address, the destination IP address mask, the protocol number, the transmission source port number, the destination port number, and the usage route list, information of a packet received from the communication application section A101 is checked against the usage route information held by the route selector A142 in the ascending order of the record numbers, and the usage route list of the record number that is first matched is used as the communication route used for redundancy.

In addition, in a case where the opposite communication device is the route change target, the external interface section A132 transmits the route change instruction packet to the opposite communication device by using all the routes stored in the route management table A141.

Since the route change instruction for the opposite communication device (terminal B) can be issued from the own device-side terminal (external terminal A) with the above-described configuration, the route change on the opposite communication device (terminal B) side can be made even in a case where an external terminal connected to the communication device is not equipped with an operating system (OS) capable of issuing the route change instruction, such as in an in-vehicle camera, or even in a case where a LAN for management cannot be prepared, such as in a mobile object. In addition, by issuing a route change instruction to the opposite communication device (terminal B) via the relay middleware, the route change instruction can be multiplexed and made highly reliable.

### [Third Embodiment]

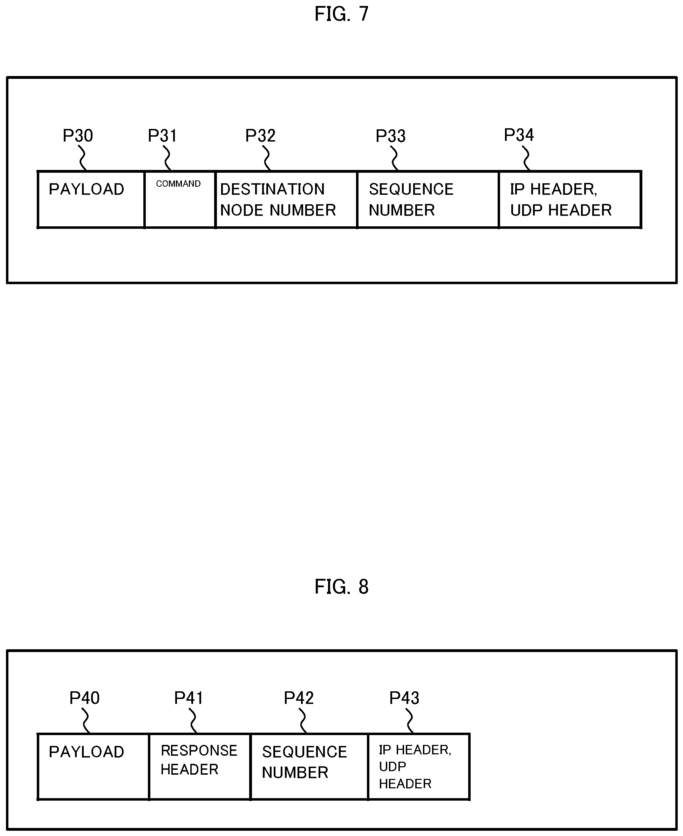

A communication device and a communication route change instruction method according to a third embodiment of the present invention will be described with reference to FIG. 7, FIG. 8, and FIG. 11.

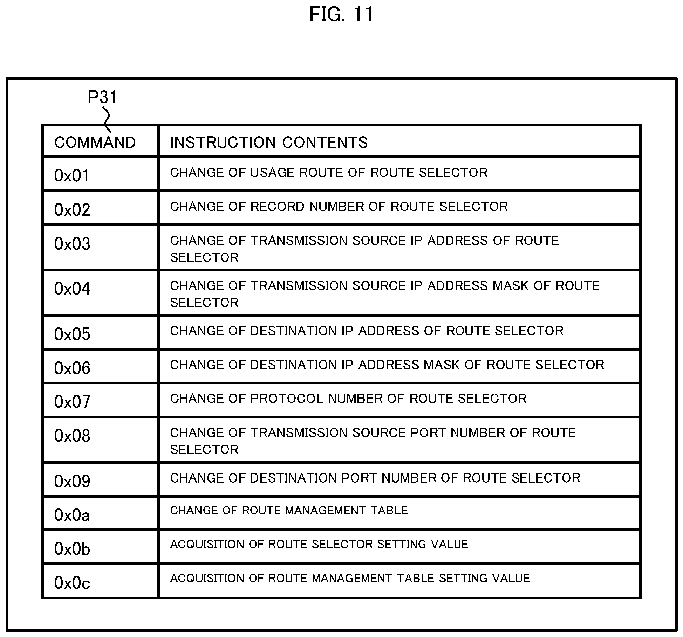

In the present embodiment, another variation of the present invention will be described by using a concrete example of a packet. FIG. 7 is a diagram for depicting an example of an instruction packet. FIG. 8 is a diagram for depicting an example of a response packet. FIG. 11 is a diagram for depicting an example of mapping between a command value and instruction contents.

Even in the own device transmission packet relay configuration as depicted in FIG. 2, the route change instruction by the external interface sections A132 and B132 is possible. Therefore, for example, it is possible to control such that the management section A102 is mounted on the terminal A, only information such as network charges is passed from an external data section A192 of the external terminal A to the management section A102, and the management section A102 in the terminal A autonomously changes the route. The external interface sections A132 and B132 can be applied not only to change the route selectors A142 and B142, but also to acquire setting values, change the settings of the route management tables A141 and B141, and the like.

For example, the route change instruction packet is allowed to have the format as depicted in FIG. 7, contents indicating the acquisition of the route selector setting values are set in a command (P31), the record number is set in a payload (P30), and a request is made to the external interface section A132. On the contrary, the external interface section A132 refers to the route selector A142 and acquires the route selector setting of the corresponding record number.

Further, by allowing the response packet to have the format as depicted in FIG. 8, setting the result (success/failure or the like) of the setting value acquisition in a response header (P41), and setting the route selector setting in a payload (P40) to return a response, the setting values of the route selector A142 can be acquired.

In addition, as depicted in the example of the mapping between the command value and the instruction contents of FIG. 11, by separating the contents of the command (P31) field for each of the instruction contents, it is possible to give an instruction to change the record number, the transmission source IP address, the destination IP address, the protocol number, the transmission source port number, the destination port number, and the like, and to instruct to change data of the route management table A141, as similar to the updating of the usage route list of the route selector A142.

For example, in a case where the management section A102 creates an instruction packet in which 0x03 meaning "change of the transmission source IP address of the route selector" is set in the command (P31) field and the record number and the changed transmission source IP address are set in the payload (P30) and transmits it to the external interface section A132, the external interface section A132 interprets the contents of the instruction packet, determines that it is an instruction of "change of the transmission source IP address of the route selector," and can change the changed transmission source IP address described in the payload (P30) to the transmission source IP address of the route selector A142.

In addition, if the result of the setting change is returned as a response packet as depicted in FIG. 8, the management section A102 of the transmission source can determine whether to retransmit the route change instruction packet on the basis of the presence or absence of the response.

It should be noted that the present invention is not limited to the above-described embodiments, and includes various modified examples. For example, the above-described embodiments have been described in detail for the purpose of clearly explaining the present invention, and are not necessarily limited to those having all of the above-described configurations. In addition, a part of configurations of one embodiment can be replaced with a configuration of another embodiment, and a configuration of another embodiment can be added to a configuration of one embodiment. In addition, it is also possible to add, delete, or replace a part of configurations of each embodiment to/from/with another configuration.

In addition, a part or all of the above-described configurations, functions, processing sections, processing means, and the like may be realized by hardware by, for example, designing, with an integrated circuit, or the like. In addition, each of the above configurations, functions, and the like may be realized by software in such a manner that a processor interprets and executes a program for realizing each function. Information such as programs, tables, and files for realizing each function can be placed in a memory, a recording device such as a hard disk, a solid state drive (SSD), or a recording medium.

## Claims

1. A communication device (A, B) that is communicably connected via a plurality of communication routes and that has a memory and a processor,
wherein the memory stores a route selector (A142, B142) and middleware,
the route selector holds usage route information for each record,
the middleware includes an external interface section (A132, B132) and an encapsulation section (A133, B133),
when receiving a route change instruction packet, the external interface section updates a usage route list held by the route selector according to the route change instruction packet, and
the encapsulation section refers to the updated route selector, and makes one transmission packet redundant into a plurality of transmission packets corresponding to the respective communication routes for transmission.

2. The communication device according to claim 1,
wherein the communication device is configured with an own device and an opposite communication device,
the memory stores a route management table (A141, B141) for storing information of a node number of an own device,
the route change instruction packet received from an external terminal includes a node number of a route change instruction target, and
the external interface section determines a route change instruction target device from the node number of the own device and the node number of the route change instruction target described in the route change instruction packet, updates the route selector of the own device if the own device is the target, and creates and transmits the route change instruction packet to the opposite communication device if the opposite communication device is the target.

3. The communication device according to claim 1,
wherein the communication device is configured with an own device and an opposite communication device, and
the own device receives the route change instruction packet from the opposite communication device, determines a route change instruction target device from a node number of a route change instruction target, updates the usage route list in the route selector of the own device if the own device is the target, and discards the route change instruction packet in a case where the own device is not the target.

4. The communication device according to claim 1,
wherein the route selector includes each information of a record number, a transmission source internet protocol address, a transmission source internet protocol address mask, a destination internet protocol address, a destination internet protocol address mask, a protocol number, a transmission source port number, a destination port number, and a usage route list, and
information of a packet received from a communication application section is checked against the usage route information held by the route selector in an ascending order of the record numbers, and the usage route list of the record number that is first matched is used as the communication route used for redundancy.

5. The communication device according to claim 2,
wherein, if the opposite communication device is the target, the external interface section creates a route change instruction packet to be transmitted to the opposite communication device, by replacing an internet protocol header with a new internet protocol header created from a transmission source internet protocol address, a next hop internet protocol address, and a destination internet protocol address of a route stored in the route management table.

6. The communication device according to claim 1,
wherein the communication device is configured with an own device and an opposite communication device,
the memory stores a management section (A102) and a virtual network interface card (A191, B191),
the management section receives information related to a route change from an external terminal, determines whether or not to change the route or contents of the route change on a basis of the information related to the route change, creates the route change instruction packet in a case where it is determined that the route change is necessary, and transmits the route change instruction packet to the virtual network interface card, and
the external interface section receives the route change instruction packet from the management section via the virtual network interface card, and updates the route selector of the own device according to the route change instruction packet or transmits the route change instruction packet to the opposite communication device.

7. The communication device according to claim 1,
wherein a management section (A102) for transmitting the route change instruction packet is provided, and,
when updating the usage route list, the external interface section returns a route change result to the management section as a response packet.

8. The communication device according to claim 2,
wherein, if the opposite communication device is the target, the external interface section transmits the route change instruction packet to the opposite communication device by using all routes stored in the route management table.

9. The communication device according to claim 1,
wherein the route change instruction packet includes each information of a usage route list, a record number, a destination node number, and a sequence number.

10. A communication route change instruction method of a communication device (A, B) that is communicably connected via a plurality of communication routes, the method comprising:
(a) a step in which, when receiving a route change instruction packet, an external interface section (A132, B132) updates a usage route list held by a route selector according to the route change instruction packet; and
(b) a step in which an encapsulation section (A133, B133) refers to the updated route selector and makes one transmission packet redundant into a plurality of transmission packets corresponding to the respective communication routes for transmission.
